# EUROPEAN PATENT APPLICATION

(11) **EP 4 506 967 A1**
(43) Date of publication of application: **12.02.2025**
(21) Application number: 23190858.3
(22) Date of filing: 10.08.2023
(51) Int. Cl.: H01B 17/58, H02G 5/00, H02K 5/12, H02K 5/22, H02K 11/042

(54) **BUSBAR OIL SEALING BETWEEN MOTOR AND INVERTER FOR AXLE DRIVES**

(71) Applicant: Vitesco Technologies GmbH, 93055 Regensburg (DE)
(72) Inventor: Skoda, Jakub, 80687 München (DE); Holman, Jiri, 80687 München (DE); Ropicky, Filip, 80687 München (DE); Slofar, Vit, 80687 München (DE)
(74) Representative: Vitesco Technologies

(57) **Abstract**

The present invention relates to a busbar connection assembly, which includes a carrier (12), an insert (14) disposed within the carrier (12), the insert (14) having an aperture (40), a busbar (18) connected to and extending through the aperture (40) of the insert (14), and at least one seal element (16a, 16b) in contact with the busbar (18) and the insert (14). The at least one seal element (16a, 16b) prevents flow between a first side (12a) of the carrier (12) and a second side (12b) of the carrier (12). In an embodiment, the busbar (18) includes at least one collar (20a,20b), and the collar (20a,20b) is adjacent to and applies force to the seal element (16a, 16b) when the busbar (18) is connected to the insert (14).

## Description

The invention relates generally to a busbar connection assembly which includes at least one sealing feature to prevent an inverter from being exposed to debris from an e-motor.

Busbars are typically used for providing high current power distribution or connection of high voltage or low voltage components. An example of components which busbars are commonly used with is a high-voltage axle drive, which is a highly integrated electric drive system. The electric drive system typically consists of an e-motor, an inverter, and a reducer. In many current designs, the connection between the inverter and the e-motor using an AC terminal consists of a plastic carrier and three-phase U-V-W busbars. Because of the current and voltage requirements for high-voltage axle drives, there is also stringent requirements for cooling. More specifically, there is a high demand on sealing against oil fog (coolant) coming from the e-motor.

One existing solution is the use of water cooling around the e-motor (cooling channels in the motor housing). However, because of the required increase in performance of the high-voltage axle drive, it is necessary to implement oil cooling.

Other existing design proposals for improving the U-V-W busbars have failed due to high thermal changes to the busbars. Each treated variant of the design solutions (such as over molded busbars or potting) have been insufficient because they did not function as desired or were not cost effective. Some of these solutions resulted in oil leakage during testing.

There exists a need for a connection assembly suitable for achieving busbar connections between an e-motor and an inverter which allow for desired current flow and also provides proper sealing.

Therefore, it is an object of the invention to provide a busbar connection assembly which provides suitable sealing between an e-motor and an inverter, and method for manufacturing the same, and more specifically to a busbar connection assembly having at least one seal which prevents flow of dirt, debris, and fluids through a carrier.

This object may be achieved by the busbar connection assembly according to independent claim 1, and the method according to independent claim 11. Preferred embodiments are given in the dependent claims.

In an embodiment, the present invention is a busbar connection assembly, which includes a busbar having at least two portions which are joined using a threaded insert. In an embodiment, a carrier is over molded around the threaded insert. The busbar connection assembly includes at least one sealing element, and in an embodiment, includes two sealing elements, such as O-rings, which are located on opposite sides of the insert. During the assembly process, each portion of the busbar is inserted into the insert on opposite sides, and have a threaded connection with the insert. As each portion of the busbar is inserted into the insert, the collars compress the O-rings, respectively, against the carrier.

In an embodiment, the present invention is a busbar connection assembly, which includes a carrier, an insert disposed within the carrier, the insert having an aperture, a busbar connected to and extending through the aperture of the insert, and at least one seal element in contact with the busbar and the insert. The at least one seal element prevents flow between a first side of the carrier and a second side of the carrier.
In an embodiment, the busbar includes at least one collar, and the collar is adjacent to and applies force to the seal element when the busbar is connected to the insert.

In an embodiment, the busbar includes a first portion extending partially into the aperture of the insert, and a second portion extending partially into the aperture of the insert. The collar is integrally formed as part of one of the first portion or the second portion, such that the seal element is located between the collar and the insert.

In an embodiment, the busbar connection assembly includes a first collar integrally formed as part of the first portion and a second collar integrally formed as part of the second portion. The seal element is disposed between the first collar and the insert or the second collar and the insert.

In an embodiment, the busbar connection assembly includes a first seal element mounted to the first portion such that the first seal element is located between the insert and the first collar and a second seal element mounted to the second portion such that the second seal element is located between the insert and the second collar. The first seal element and the second seal element prevent flow between the first side of the carrier and the second side of the carrier.

In an embodiment, the carrier includes a first region, where the first portion extends through the first region and partially into the aperture of the insert, and a first transition region integrally formed as part of the first region. The carrier also includes a second region, the insert is mounted in the second region of the carrier, and a third region, where the second region disposed between the first region and the third region. The second portion extends through the third region and partially into the aperture of the insert, and a second transition region is integrally formed as part of the third region. The first seal element is located in the first transition region and the second seal element is located in the second transition region.

In an embodiment, the busbar includes a first threaded portion being part of the first portion and a second threaded portion being part of the second portion. The first threaded portion extends into one side of the aperture of the insert, and the second threaded portion extends into another side of the aperture of the insert.

In an embodiment, the busbar connection assembly includes at least one assembly flange integrally formed as part of the bus bar. An electric motor or inverter is connected to the at least one assembly flange.

In an embodiment, the busbar connection assembly includes a sleeve subassembly, and a non-threaded portion integrally formed as part of the bus bar. The sleeve subassembly is connected to the non-threaded portion integrally formed as part of the bus bar.

In an embodiment, the sleeve subassembly includes a circular base flange which partially surrounds the non-threaded portion of the bus bar, a first flange portion integrally formed with the circular base flange, a second flange portion integrally formed with the circular base flange, and an outer connecting flange disposed between and connected to the first flange portion and the second flange portion. A portion of the first flange portion extends into a notch integrally formed as part of the carrier when the sleeve subassembly is connected to the bus bar, preventing the rotation of the bus bar relative to the carrier.

In an embodiment, the sleeve subassembly includes a circular base flange which partially surrounds the non-threaded portion of the bus bar, an elongated connecting flange portion integrally formed with the circular base flange, and a second flange portion integrally formed with the circular base flange. The elongated connecting flange portion and the second flange portion are clamped together to connect the circular base flange to the non-threaded portion of the bus bar. A portion of the elongated connecting flange portion extends into a notch integrally formed as part of the carrier when the sleeve subassembly is connected to the bus bar, preventing the rotation of the bus bar relative to the carrier.

In an embodiment, the busbar connection assembly includes an elongated shaft portion and a fastening nut attached to the elongated shaft portion. The elongated shaft portion extends through the insert such that the insert is disposed between the fastening nut and the at least one seal element, and the sleeve subassembly is attached to elongated shaft portion such that the fastening nut is located between the sleeve subassembly and the inser.

In an embodiment, the carrier is part of the housing of an electric motor.

In an embodiment, the carrier is connected to the housing of an electric motor.

In an embodiment, the busbar is press-fit into the insert.

In an embodiment, the present invention is a method for assembling a busbar connection assembly, which includes the steps of providing a carrier, providing an insert, providing a busbar, providing at least one collar integrally formed as part of the busbar, and providing at least one seal element. In an embodiment, the method of the present invention includes inserting the insert into the carrier, placing the at least one seal element into the carrier such that the at least one seal element is adjacent the insert, and inserting the busbar at least partially into the insert such that the at least one seal element is located and compressed between the at least one collar and an outer surface of the insert.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
Fig. 1 is a perspective partial sectional view of a busbar connection assembly, according to embodiments of the present invention;
Fig. 2 is a partial sectional view of a busbar connection assembly, according to embodiments of the present invention;
Fig. 3 is an enlarged partial sectional view of a busbar connection assembly, according to embodiments of the present invention;
Fig. 4A is a top view of an alternate embodiment of a busbar connection assembly, according to embodiments of the present invention;
Fig. 4B is a partial sectional view taken along lines 4B-4B of Fig. 4A;
Fig. 4C is a bottom view of an alternate embodiment of a busbar connection assembly, according to embodiments of the present invention;
Fig. 4D is a partial exploded view of a busbar connection assembly, according to embodiments of the present invention;
Fig. 5A is a side view of a busbar connection assembly, according to embodiments of the present invention;
Fig. 5B is a perspective view of a portion of a busbar used as part of a busbar connection assembly, according to embodiments of the present invention;
Fig. 6A is a perspective view of a sleeve subassembly which is part a busbar connection assembly, according to embodiments of the present invention;
Fig. 6B is a sectional view taken along line 6B-6B of Fig. 4A;
Fig. 7A is an alternate embodiment of an insert and a carrier used as part of a busbar connection assembly, according to embodiments of the present invention;
Fig. 7B is another alternate embodiment of an insert and a carrier used as part of a busbar connection assembly, according to embodiments of the present invention;
Fig. 8 is a perspective view of a sleeve subassembly used as part of a busbar connection assembly, according to embodiments of the present invention;
Fig. 9 is a partial sectional view of an alternate embodiment of a busbar connection assembly, according to embodiments of the present invention;
Fig. 10 is an exploded view of a sleeve subassembly which is part of an alternate embodiment of a busbar connection assembly, according to embodiments of the present invention;
The following description of the preferred embodiment(s) is merely exemplary in nature and is in no way intended to limit the invention, its application, or uses.

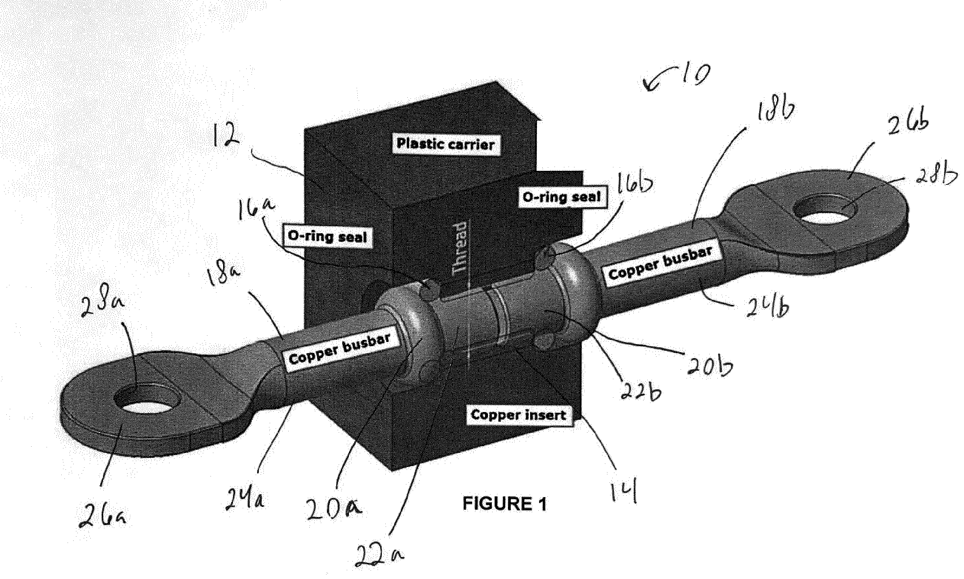

An embodiment of a busbar connection assembly according to the present invention is shown in Fig. 1, generally at 10. Referring to the Figs. generally, the busbar connection assembly 10 includes a carrier 12, an insert 14, and two seal elements 16a,16b, which in this embodiment are O-rings 16a,16b. The busbar assembly 10 also includes at least one busbar shown generally at 18, having a first portion 18a and a second portion 18b. Integrally formed as part of the first portion 18a is a first collar 20a, and integrally formed as part of the second portion is a second collar 20b. An inverter is positioned on first side, shown generally at 12a, of the carrier 12, and an electric motor is positioned on a second side, shown generally at 12b, of the carrier 12. The carrier 12 separates the inverter and the electric motor.

The first portion 18a also includes a first threaded portion 22a which is on the opposite side of the collar 20a as a first non-threaded portion 24a. Similarly, the second portion 18b also includes a second threaded portion 22b which is on the opposite side of the collar 20b as a second non-threaded portion 24b. The outer diameters of the threaded portions 22a and the non-threaded portions 24a,24b are substantially similar, and the outer diameter of the collars 20a,20b is larger than the outer diameters of the threaded portions 22a and the non-threaded portions 24a,24b.

Integrally formed with the first non-threaded portion 24a is a first assembly flange 26a, and the first assembly flange 26a includes an aperture 28a, and integrally formed with the second non-threaded portion 24b is a second assembly flange 26b, and the second assembly flange 26b includes an aperture 28b.

The carrier 12 has an aperture, shown generally at 30, and the aperture 30 includes different regions having different diameters. More specifically, there is a first region, shown generally at 32a, a second region, shown generally at 32b, and a third region, shown generally at 32c. The first region 32a and the third region 32c have a first diameter 34a, and the second region 32b has a second diameter 34b, where the second diameter 34b is less than the first diameter 34a. There are also two transition regions 36a,36b, where the first transition region 36a is integrally formed with the first region 32a, and the second transition region 36b is integrally formed with the third region 32c.

The width 38 of the insert 14 substantially the same as the width of the second region 32b. In the embodiment shown, the insert 14 is made of metal, and the carrier 12 is made of plastic such that during assembly, the carrier 12 is over molded around the insert 14. The insert 14 also includes a threaded aperture 40, which extends the entire width 38 of the insert 14.

Once the carrier 12 is over molded around the insert 14, during assembly, the first O-ring 16a is placed in the first region 32a of the aperture 30 such that the first O-ring 16a is adjacent to and in contact with the transition region 36a and a first outer surface 42a of the insert 14. The second O-ring 16b is placed in the third region 32c of the aperture 30 such that the second O-ring 16b is adjacent to and in contact with the transition region 36b and a second outer surface 42b of the insert 14.

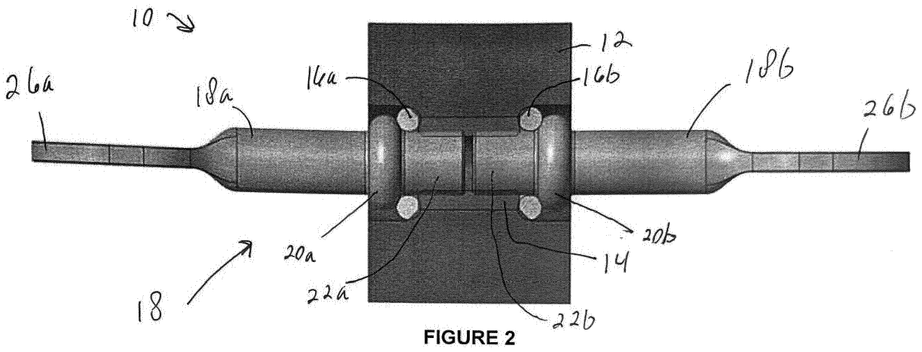

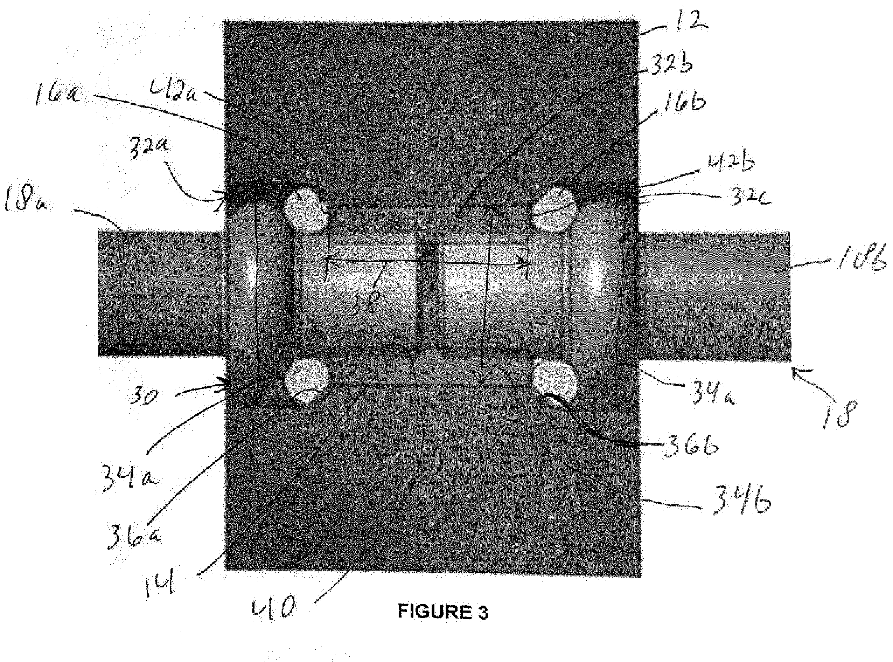

During assembly, the first portion 18a is partially inserted into the carrier 12 and the insert 14. More specifically, the first portion 18a is positioned such that the first threaded portion 22a is engaged with the threaded aperture 40, and the first portion 18a is rotated until the first portion 18a is in the position shown in Figs. 1-3. When the first portion 18a is in the position shown in Figs. 1-3, the first threaded portion 22a is partially disposed in the first region 32a and partially disposed in the threaded aperture 40, and the first collar 20a is disposed in the first region 32a of the carrier 12. As the first portion 18a is inserted into the carrier 12, the collar first 20a applies force to the first O-ring 16a such that the first O-ring 16a is compressed between the first collar 20a and the transition region 36a and the first outer surface 42a of the insert 14.

Also during assembly, the second portion 18b is partially inserted into the carrier 12 and the insert 14. More specifically, the second portion 18b is positioned such that the second threaded portion 22b is engaged with the threaded aperture 40, and the second portion 18b is rotated until the second portion 18b is in the position shown in Figs. 1-3. When the second portion 18b is in the position shown in Figs. 1-3, the second threaded portion 22b is partially disposed in the third region 32c and partially disposed in the threaded aperture 40, and the second collar 20b is disposed in the third region 32c of the carrier 12. As the second portion 18b is inserted into the carrier 12, the second collar 20b applies force to the second O-ring 16b such that the second O-ring 16b is compressed between the second collar 20b and the transition region 36b and the second outer surface 42b of the insert 14.

In an alternate embodiment, instead of the first O-ring 16a being placed in the first region 32a and the second O-ring 16b being placed in the third region 32c during assembly, the O-rings 16a, 16b may be placed on the first portion 18a and the second portion 18b, respectively, prior to being connected to the insert 14.

Once assembled, the inverter and the electric motor may be placed in electrical communication with one another through each portion 18a, 18b of the bus bar 18 and the insert 14. More specifically, current flows from the inverter, through the first portion 18a, the insert 14, the second portion 18b, and to the electric motor. The inverter may be connected to the first assembly flange 26a, and the electric motor may be connected to the second assembly flange 26b. However, it is within the scope of the invention that the inverter may be connected to the second assembly flange 26b, and the electric motor may be connected to the first assembly flange 26a. The compression of the O-rings 16a,16b provides a sealing function which prevents the inverter from becoming exposed to dust, dirt, debris, and coolant spray, or oil spray, from the electric motor.

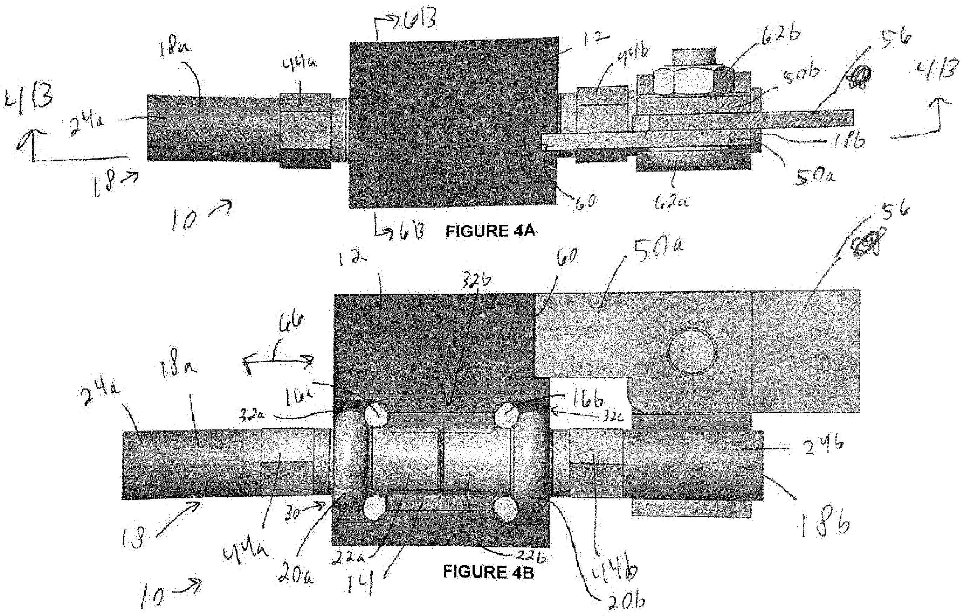

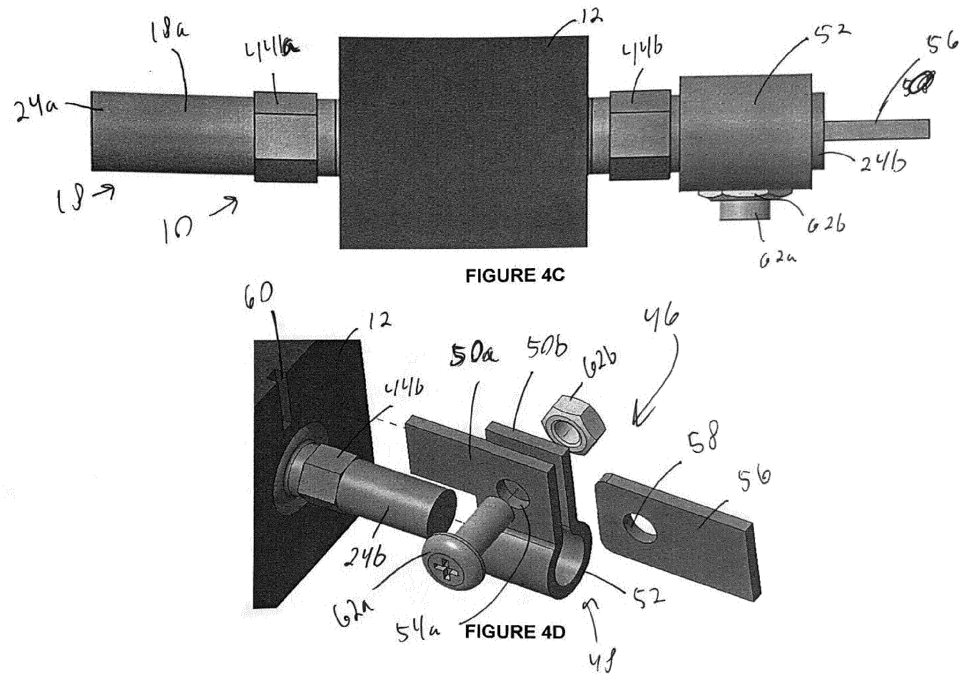

Another embodiment of the present invention is shown in Fig. 4A-6B, with like numbers referring to like elements. However, in this embodiment, the portions 18a,18b of the bus bar 18 do not have the assembly flanges 26a,26b. Each portion 18a,18b of the bus bar 18 in this embodiment includes a hexagonal outer surface portion 44a,44b, each of which is formed as part of the non-threaded portion 24a,24b of the bus bar 18. Each hexagonal outer surface portion 44a,44b is used (with a corresponding tool) to connect each portion 18a,18b of the bus bar 18 into the carrier 12 and insert 14 in a similar manner to the previous embodiment.

The embodiment shown in Figs. 4A-6B also includes a sleeve subassembly, shown generally at 46. The sleeve subassembly 46 includes a connector, shown generally at 48, having a first flange portion 50a and a second flange portion 50b. Both flange portions 50a,50b are integrally formed with a substantially circular base flange 52, and there is a cavity, shown generally at 52a, surrounded by the base flange 52. Each flange portion 50a,50b also includes a respective assembly aperture 54a,54b. The sleeve subassembly 46 also includes an outer connecting flange 56, and the outer connecting flange 56 also has an assembly aperture 58.

During assembly, the connector 48 is attached to the non-threaded portion 24b of the bus bar 18 by inserting part of the non-threaded portion 24b into the aperture 52a of the circular base flange 52, such that the non-threaded portion 24b is at least partially surrounded by the circular base flange 52. The connector 48 is also positioned such that a portion of the first flange portion 50a is partially inserted into a notch 60, as shown in Figs. 4A and 4B. The outer connecting flange 56 is then positioned between the flange portions 50a,50b, such that the assembly aperture 58 is aligned with the assembly apertures 54a,54b. A fastener, which in this embodiment is a bolt 62a, is inserted through the assembly apertures 54a,54b,58, and then a nut 62b is attached to the bolt 62a. The nut 62b and bolt 62a are tightened such that the outer connecting flange 56 is clamped between the flange portions 50a,50b, and clamping force is applied to the non-threaded portion 24b by the circular base flange 52, securing the sleeve subassembly 46 to the non-threaded portion 24b of the bus bar 18. The sleeve subassembly 46 is prevented from rotating because of the flange portion 50a being partially inserted into the notch 60. The outer connecting flange 56 is substantially flat, which reduces cost of manufacturing, and facilitates different types of connections to the outer connecting flange 56.

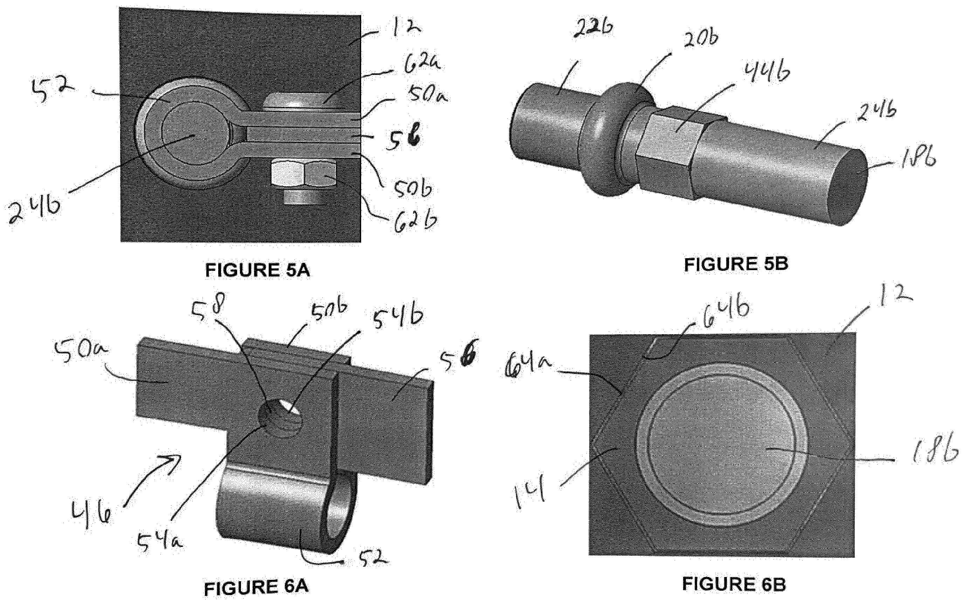

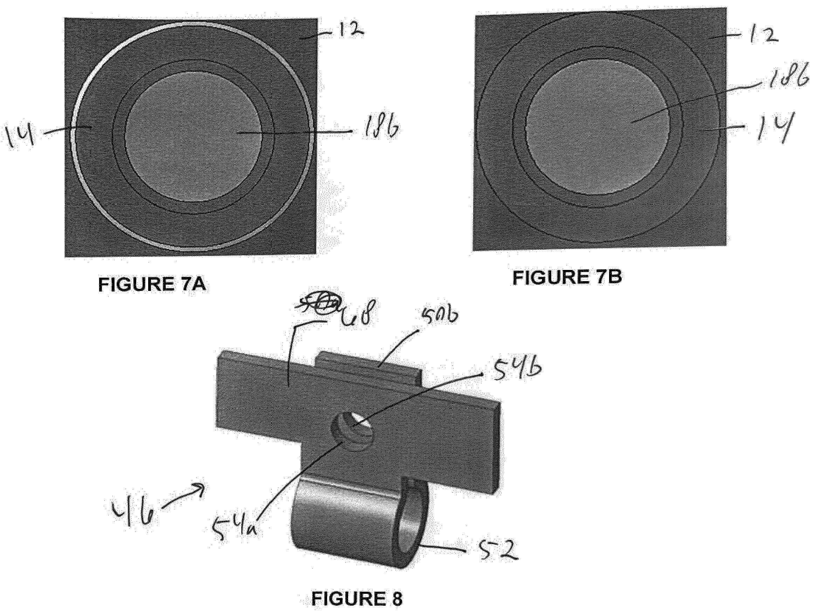

Referring to Fig. 6B, the insert 14 has a hexagonal outer surface portion 64a, and the second region 34b of the carrier 12 also has a correspondingly shaped hexagonal inner surface portion 64b. The hexagonal surface portions 64a,64b prevent the insert 14 and the carrier 12 from rotating relative to one another. However, in this embodiment, the insert 14 is able to move axially in the direction shown by the arrows 66, and is held in place between the seal elements 16a,16b and the collars 20a,20b, in a similar manner to the previous embodiment. However, in an alternate embodiment shown in Fig. 7A, the outer surface of the insert 14 and inner surface of the second region 34b of the carrier 12 may have correspondingly round shapes, such that the insert 14 may not only move in the direction of the arrows 66, but the insert 14 may also rotate relative to the carrier 12. In another alternate embodiment shown in Fig. 7B, the outer surface of the insert 14 and inner surface of the second region 34b of the carrier 12 have correspondingly round shapes, but the insert 14 is overmolded to the carrier 12, such that the insert 14 does not move relative to the carrier 12.

In the embodiments shown in Figs. 1-7B, the current is transferred from the first portion 18a of the bus bar 18, through the insert 14 and to the second portion 18b of the bus bar 18, and directly from the first portion 18a of the bus bar 18 to the second portion 18b of the bus bar 18.

An alternate embodiment of the sleeve subassembly 46 is shown in Fig. 8. In the embodiment shown in Fig. 8, the sleeve subassembly 46 includes an elongated connecting flange portion 68, which performs the functions of the flange portion 50a and the outer connecting flange 56 from the previous embodiment. The bolt 62a is inserted through the assembly apertures 54a,54b, and then the nut 62b is attached to the bolt 62a. The nut 62b and bolt 62a are tightened such that the flange portions 50a,50b are connected together, and clamping force is applied to the non-threaded portion 24b by the circular base flange 52, securing the sleeve subassembly 46 to the non-threaded portion 24b of the bus bar 18 in a similar manner to the previous embodiment.

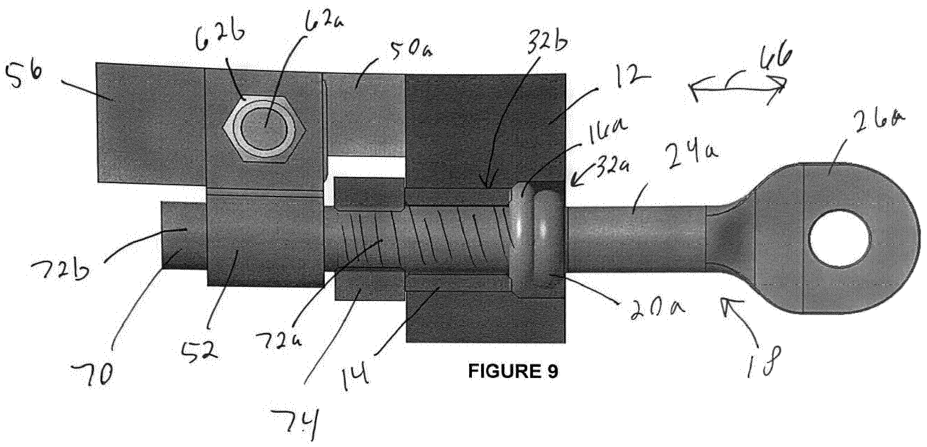

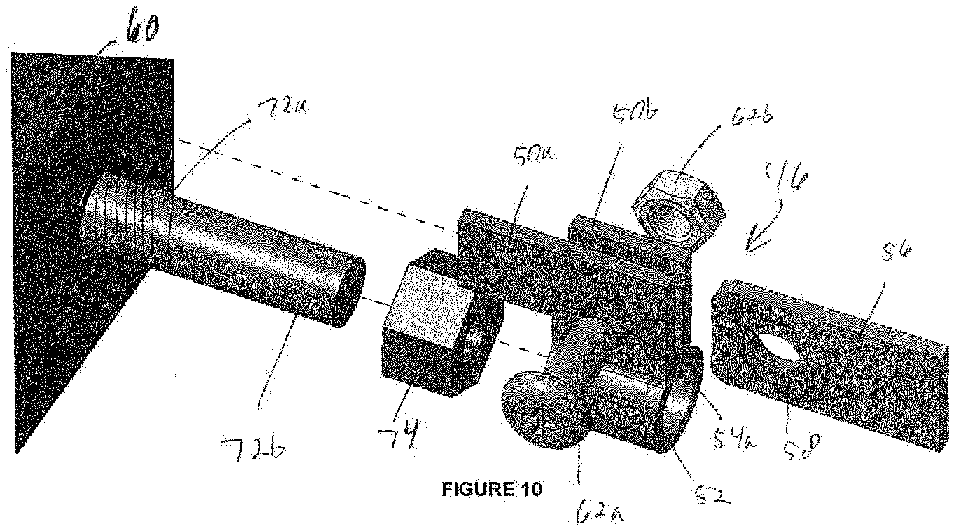

Another embodiment of the busbar connection assembly 10 is shown in Figs. 9 and 10, with like numbers referring to like elements. In this embodiment, the carrier 12 includes the first two regions 32a,32b, but does not have the third region 32c. Integrally formed with the non-threaded portion 24a and the first collar 20a is an elongated shaft portion 70. The elongated shaft portion 70 includes a threaded portion 72a and a non-threaded portion 72b. A fastening nut 74 is attached to the threaded portion 72a of the elongated shaft portion 70, such that the fastening nut 74 contacts the insert 14, securing the insert 14 between the fastening nut 74, and the O-ring 16a. When assembled, the fastening nut 74 is not in contact with the carrier 12, the fastening nut 74 is only in contact with the insert 14. Sealing is provided by the O-ring 16a in a similar manner to the previous embodiments. Also, in this embodiment, the insert 14 is overmolded to carrier 12, such that the insert 14 is positioned between the fastening nut 74 and the O-ring 16a, and the bus bar 18 is held in place and does not have any axial movement in the direction indicated by the arrows 66 in Fig. 9. The embodiment of the busbar connection assembly 10 is shown in Figs. 9 and 10 also includes the sleeve subassembly 46, which is connected to the non-threaded portion 72b of the elongated shaft portion 70 in a similar manner to the previous embodiment. In the embodiment shown in Figs. 9 and 10, the position of the assembly flange 26a may be adjusted by rotating the assembly flange 26a to various positions prior to tightening the fastening nut 74 to accommodate the connection to an e-motor.

Additionally, the alternate embodiment of the sleeve subassembly 46 shown in Fig. 8 may be used with the embodiment shown in Figs. 9 and 10.

The present invention is a busbar connection assembly 10 having a busbar 18 which has two portions 18a,18b inserted into a carrier 12 such that each of the portions 18a,18b of the busbar 18 is connected to an insert 14, where the carrier 12 is over molded around the insert 14. The busbar connection assembly 10 also includes two seal elements 16a,16b. Each portion 18a,18b of the busbar 18 has a collar 20a,20b, and when assembled, the first portion 18a of the busbar 18 extends through one of the seal elements 16a, and the other portion 18b extends through the other of the seal elements 16b. The first seal element 16a is compressed between the first collar 20a and a first outer surface 42a and first transition region 36a of the insert 14, and the other the seal element 16b is compressed between the second collar 20b and a second outer surface 42a and second transition region 36b of the insert 14.

The present invention is not limited to the embodiments described above. In an alternate embodiment, instead of the carrier 12 being over molded around the insert 14, the insert 14 may be press-fit into the carrier 12. In another embodiment, instead the bus bar 18 having the threaded portions 22a,22b, each portion 18a,18b may be connected to the insert 14 using a press-fit connection.

In another embodiment, the bus bar 18 has only the first portion 18a and the collar 20a, such that the busbar 18 is a single-piece busbar. In this embodiment, the threaded portion 22a is long enough to extend through the insert 14 such that other components may be connected to the busbar 18 on both sides 12a, 12b of the carrier 12.

In an embodiment, the carrier 12 may be part of the housing of the electric motor. In another embodiment, the carrier 12 may be a separate component attached to the housing of the electric motor.

The description of the invention is merely exemplary in nature and, thus, variations that do not depart from the gist of the invention are intended to be within the scope of the invention. Such variations are not to be regarded as a departure from the spirit and scope of the invention.

## Claims

1. A busbar connection assembly, comprising:
- a carrier (12);
- an insert (14) disposed within the carrier (12), the insert (14) having an aperture (40);
- a busbar (18) connected to and extending through the aperture (40) of the insert (14);
- at least one seal element (16a, 16b) in contact with the busbar (18) and the insert (14);
- wherein the at least one seal element (16a,16b) prevents flow between a first side (12a) of the carrier (12) and a second side (12b) of the carrier (12).

2. The busbar connection assembly of claim 1, the busbar (18) further comprising:
- at least one collar (20a,20b);
- wherein the at least one collar (20a,20b) is adjacent to and applies force to the at least one seal element (16a, 16b) when the busbar (18) is connected to the insert (14).

3. The busbar connection assembly of claim 2, the busbar (18) further comprising:
- a first portion (18a) extending partially into the aperture (40) of the insert (14); and
- a second portion (18b) extending partially into the aperture (40) of the insert (14);
- wherein the at least one collar (20a,20b) is integrally formed as part of one of the first portion (18a) or the second portion (18b), such that the at least one seal element (16a,16b) is located between the at least one collar (20a,20b) and the insert (14).

4. The busbar connection assembly of claim 3, at least one collar (20a,20b) further comprising:
- a first collar (20a) integrally formed as part of the first portion (18a);
- a second collar (20b) integrally formed as part of the second portion (18b);
- wherein the at least one seal element (16a,16b) is disposed between the first collar (20a) and the insert (14) or the second collar (20b) and the insert (14).

5. The busbar connection assembly of claim 4, at least one seal element (16a,16b) further comprising:
- a first seal element (16a) mounted to the first portion (18a) such that the first seal element (16a) is located between the insert (14) and the first collar (20a); and
- a second seal element (16b) mounted to the second portion (18b) such that the second seal element (16b) is located between the insert (14) and the second collar (20b);
- wherein the first seal element (16a) and the second seal element (16b) prevent flow between the first side (12a) of the carrier (12) and the second side (12b) of the carrier (12).

6. The busbar connection assembly of claim 5, the carrier (12) further comprising:
- a first region (32a), the first portion (18a) extending through the first region (32a) and partially into the aperture (40) of the insert (14);
- a first transition region (36a) integrally formed as part of the first region (32a);
- a second region (32b), the insert (14) is mounted in the second region (32b) of the carrier (12);
- a third region (32c), the second region (32b) disposed between the first region (32a) and the third region (32c), the second portion (18b) extending through the third region (32c) and partially into the aperture (40) of the insert (14); and
- a second transition region (36b) integrally formed as part of the third region (32c);
- wherein and the first seal element (16a) is located in the first transition region (36a) and the second seal element (16b) is located in the second transition region (36b).

7. The busbar connection assembly of claim 3, the busbar (18) further comprising:
- a first threaded portion (22a) being part of the first portion (18a);
- a second threaded portion (22b) being part of the second portion (18b);
- wherein the first threaded portion (22a) extends into one side of the aperture (40) of the insert (14), and the second threaded portion (22b) extends into another side of the aperture (40) of the insert (14).

8. The busbar connection assembly of any one of the preceding claims, further comprising:
- at least one assembly flange (26a,26b) integrally formed as part of the bus bar (18);
- wherein an electric motor or inverter is connected to the at least one assembly flange (26a,26b).

9. The busbar connection assembly of any one of the preceding claims, further comprising:
- a sleeve subassembly (46); and
- a non-threaded portion (24b,72b) integrally formed as part of the bus bar (18);
- wherein the sleeve subassembly (46) is connected to the non-threaded portion (24b,72b) integrally formed as part of the bus bar (18).

10. The busbar connection assembly of any one of the preceding claims, the sleeve subassembly (46) further comprising:
- a circular base flange (52), the circular base flange (52) partially surrounds the non-threaded portion (24b,72b) of the bus bar (18);
- a first flange portion (50a) integrally formed with the circular base flange (52);
- a second flange portion (50b) integrally formed with the circular base flange (52); and
- an outer connecting flange (56) disposed between and connected to the first flange portion (50a) and the second flange portion (50b);
- wherein, a portion of the first flange portion (50a) extends into a notch (60) integrally formed as part of the carrier (12) when the sleeve subassembly (46) is connected to the bus bar (18), preventing the rotation of the bus bar (18) relative to the carrier (12).

11. The busbar connection assembly of claim 10, the sleeve subassembly (46) further comprising:
- a circular base flange (52), the circular base flange (52) partially surrounds the non-threaded portion (24b,72b) of the bus bar (18);
- an elongated connecting flange portion (68) integrally formed with the circular base flange (52);
- a second flange portion (50b) integrally formed with the circular base flange (52), and the elongated connecting flange portion (68) and the second flange portion (50b) are clamped together to connect the circular base flange (52) to the non-threaded portion (24b,72b) of the bus bar (18); and
- wherein, a portion of the elongated connecting flange portion (68) extends into a notch (60) integrally formed as part of the carrier (12) when the sleeve subassembly (46) is connected to the bus bar (18), preventing the rotation of the bus bar (18) relative to the carrier (12).

12. The busbar connection assembly of any one of the preceding claims, further comprising
- an elongated shaft portion (70); and
- a fastening nut (74) attached to the elongated shaft portion (70);
- wherein the elongated shaft portion (70) extends through the insert (14) such that the insert (14) is disposed between the fastening nut (74) and the at least one seal element (16a,16b), and the sleeve subassembly (46) is attached to elongated shaft portion (70) such that the fastening nut (74) is located between the sleeve subassembly (46) and the insert (14).

13. The busbar connection assembly of any one of the preceding claims, wherein the carrier (12) is part of the housing of an electric motor.

14. The busbar connection assembly of any one of the preceding claims, wherein the carrier (12) is connected to the housing of an electric motor.

15. The busbar connection assembly of any one of the preceding claims, wherein the busbar (18) is press-fit into the insert.

16. A method for assembling a busbar connection assembly, comprising the steps of:
- providing a carrier (12);
- providing an insert (14);
- providing a busbar (18);
- providing at least one collar (20a,20b) integrally formed as part of the busbar (18); and
- providing at least one seal element (16a,16b);
- inserting the insert (14) into the carrier (12);
- placing the at least one seal element (16a, 16b) into the carrier (12) such that the at least one seal element (16a,16b) is adjacent the insert (14);
- inserting the busbar (18) at least partially into the insert (14) such that the at least one seal element (16a, 16b) is located and compressed between the at least one collar (20a,20b) and an outer surface (42a,42b) of the insert (14).
